# EUROPÄISCHE PATENTSCHRIFT

(11) **EP 0 605 551 B1**
(45) Veröffentlichungstag und Bekanntmachung des Hinweises auf die Patenterteilung: **15.11.1995**
(21) Anmeldenummer: 92920148.1
(22) Anmeldetag: 22.09.1992
(51) Int. Cl.: F16K 17/38

(54) **BRANDSCHUTZVENTIL MIT SCHLIESSFEDER ZUM AUTOMATISCHEN ABSPERREN VON LEITUNGEN**
FIRE-PROTECTION VALVE WITH SHUTTING SPRING FOR AUTOMATICALLY SHUTTING OFF CONDUITS
SOUPAPE COUPE-FEU AVEC RESSORT DE FERMETURE AUTOMATIQUE DE CANALISATIONS

(30) Priorität: 25.09.1991 DE 4131859
(43) Veröffentlichungstag der Anmeldung: 13.07.1994
(73) Patentinhaber: Mertik Maxitrol GmbH & Co. KG, O-06484 Quedlinburg (DE)
(72) Erfinder: SCHULZE, Klaus, D-4305 Gernrode (DE); LÖRCHNER, Henning, D-4301 Ditfurt (DE)
(74) Vertreter: Jaekel, Gerd
(86) Internationale Anmeldenummer: EP9202190
(87) Internationale Veröffentlichungsnummer: WO9306397

(56) Entgegenhaltungen:
- US-A- 3 720 220

## Beschreibung

Die Erfindung betrifft ein Brandschutzventil mit Schließfeder zum automatischen Absperren von Leitungen, insbesondere von Gasleitungen. Solche Ventile werden in Rohrleitungen z.B. vor Gasarmaturen, Gasgeräten, Gaszählern usw. eingesetzt. Sie dienen dazu, bei einem Brand die Gaszufuhr zu unterbrechen, bevor die Temperatur an den genannten Gasgeräten so hoch wird, daß deren Dichtheit gefährdet ist. Dabei kommen vorrangig Ventile zum Einsatz, die als Schließkörper eine Kugel oder einen Kegel aufweisen.

So ist aus der EP-OS 118 152 ein Ventil bekannt, bei dem eine Kugel einerseits durch eine Feder und andererseits durch ein aus einer Legierung mit thermischen Formerinnerungsvermögen bestehendem Teil in Offen- bzw. nach Erreichen einer Grenztemperatur in Schließstellung gehalten wird, wobei die Feder so ausgebildet ist, daß nach dem Schließvorgang ein selbsttätiges Öffnen nicht möglich ist.

Eine ebenfalls eine Kugel als Schließkörper aufweisende Lösung ist in der US-PS 3 720 220 beschrieben. Dabei wird die unter der Kraft der in Schließrichtung wirkenden Feder stehende Kugel durch einen radial das Gehäuse durchdringenden Stößel in Offenstellung gehalten. Der Stößel wiederum stützt sich außerhalb des Gehäuses an aus einem Schmelzlot bestehenden Formteilen ab. Bei Erreichen der Schmelztemperatur wird das Schmelzlot durch den Stößel verdrängt, der dadurch seinerseits den Schließweg für die Kugel freigibt. Durch die Feder wird die Kugel in Schließstellung gehalten.

Bei beiden Lösungen ist es von Nachteil, daß, wenn die Federkraft durch sehr hohe Temperaturen ihre Kraft verliert, ein sicheres Verschließen nicht mehr gewährleistet ist.

In der EP-OS 343 615 wird desweiteren ein Ventil beschrieben, das als Schließkörper einen Kegel aufweist. Bei dieser Lösung verbindet die den Deckel des Ventils durchdringende Führungsstange den Kegel mit einem Schmelzkörper, der mit einer Druckfeder gegen den Deckel vorgespannt ist. Sobald der Schmelzkörper erweicht, wird die Führungsstange aus ihm herausgezogen, so daß sich der Kegel unter der Wirkung der Druckfeder schlagartig in Schließrichtung bewegen kann.

Auch bei dieser Lösung ist es von Nachteil, daß, wenn die Druckfeder durch sehr hohe Temperaturen ihre Kraft verliert, ein sicheres Verschließen nicht mehr gewährleistet ist.

Weiterhin weist diese Lösung den Mangel auf, daß zur Erzielung der Dichtheit Kegel und Kegelsitz, insbesondere in Bezug auf ihre Rundheit und Oberflächengüte, genau ineinander passen müssen. Das führt zum einen zu sehr hohem Fertigungsaufwand, zum anderen ist die Dichtheit dieser Kombination nicht reproduzierbar. Bei neuem Ansetzen des üblicherweise durch Drehen hergestellten Kegels kann, insbesondere wenn die Rundheit beider Teile nicht vollkommen ist, eine völlig andere Leckrate erreicht werden. Aus diesem Grund führt auch eine im Rahmen der Fertigung durchzuführende Dichtheitsprüfung nicht zu dem gewünschten Erfolg, so daß nur sehr hohe Leckraten gewährleistet werden können.

Besonders unbefriedigend sind nach dem gegenwärtigen Stand der Technik erreichte Lösungen für die Verwendung bei Durchgangsventilen, wie zum Beispiel in der DE-OS 39 16 100 beschrieben, bei denen der Schließkörper senkrecht zur Strömungsrichtung bewegt wird. Das hat zur Folge, daß Bauteile bzw. Profile aus dem vorhandenen Rohrleitungsprofil herausragen. Bei der Verwendung eines Kegels ist es außerdem erforderlich beidseitig des Kegelmantels Dichtflächen ineinander einzupassen, was zu sehr hohen Fertigungsanforderungen führt.

Der dadurch bedingte hohe Preis dieser Ventile hat ihre ansonsten gewünschte generelle Einsetzbarkeit bisher verhindert.

Ein Brandschutzventil gemäß dem Oberbegriff des Patentanspruchs 1 ist in der US-A-3 720 220 beschrieben.

Der im Patentanspruch 1 angegebenen Erfindung liegt das Problem zugrunde ein Ventil der genannten Art zu entwickeln, das einen reproduzierbar dichten Sitz gewährleistet. Auch dann, wenn die Federkraft durch sehr hohe Temperaturen ihre Kraft verliert, ist zu sichern, daß das Ventil selbst bei Stoß und/oder Erschütterung verschlossen bleibt. Weiterhin soll das Ventil so konzipiert sein, daß es keine Bauteile aufweist, die aus dem vorhandenen Rohrleitungsprofil herausragen. Dadurch soll das erfindungsgemäße Ventil direkt in Rohrleitungssystemen nachrüstbar sein. Ebenfalls soll es ohne Schwierigkeiten normalen Absperrhähnen vorgeschaltet werden können. Zusätzlich ist der Herstellungsaufwand so gering wie möglich zu halten.

Erfindungsgemäß wird das Problem durch die im kennzeichnenden Teil des ersten Patentanspruches genannten Merkmale gelöst. Der mit der Erfindung erzielte Vorteil besteht insbesondere darin, daß gesichert ist, daß das Ventil nach erfolgtem Schließen seine dichtende Schließstellung auch beim Ausfall der Schließfeder durch höhere Temperaturen und bei Stoßbelastungen beibehält, und daß ein reproduzierbar dichter Sitz gewährleistet ist. Dabei ist der Aufbau des Ventils so gelöst worden, daß keine Bauteile des Ventils aus dem vorhandenen Rohrleitungsprofii herausragen, und somit das erfindungsgemäße Ventil direkt in Rohrleitungssystemen nachrüstbar ist und ohne Schwierigkeiten normalen Absperrhähnen vorgeschaltet werden kann.

Vorteilhafte Ausgestaltungen sind in den Patentansprüchen 2 bis 9 angegeben. Dadurch wird ein einfacher Aufbau erreicht, so daß der Herstellungsaufwand sehr gering gehalten werden kann.

Ausführungsbeispiele der Erfindung sind in den Zeichnungen dargestellt und werden im folgenden näher beschrieben.

Es zeigen
- Fig. 1: ein Beispiel eines erfindungsgemäßen brandschutzventils im Schnittverlauf A - A aus Fig. 2 in Offenstellung
- Fig. 2: eine Draufsicht der Fig. 1 im Schnitt B - B
- Fig. 3: eine Draufsicht der Fig. 1 im Schnitt C - C
- Fig. 4: eine Draufsicht der Fig. 1 im Schnitt C - C während der Montage der Druckfeder
- Fig. 5: ein weiteres Beispiel eines erfindungsgemäßen Brandschutzventiles im Schnitt in Offenstellung
- Fig. 6: ein weiteres Beispiel eines erfindungsgemäßen Brandschutzventiles im Schnitt in Schließstellung
- Fig. 7: eine Draufsicht der Fig. 5 im Schnitt D - D
- Fig. 8: eine Draufsicht der Fig. 5 im Schnitt E - E
- Fig. 9: ein weiteres Beispiel eines erfindungsgemäßen Brandschutzventiles im Schnitt in Offenstellung
- Fig. 10: ein weiteres Beispiel eines erfindungsgemäßen Brandschutzventiles im Schnitt in Offenstellung
- Fig. 11: eine Draufsicht der Fig. 5 im Schnitt E - E mit veränderter Spange

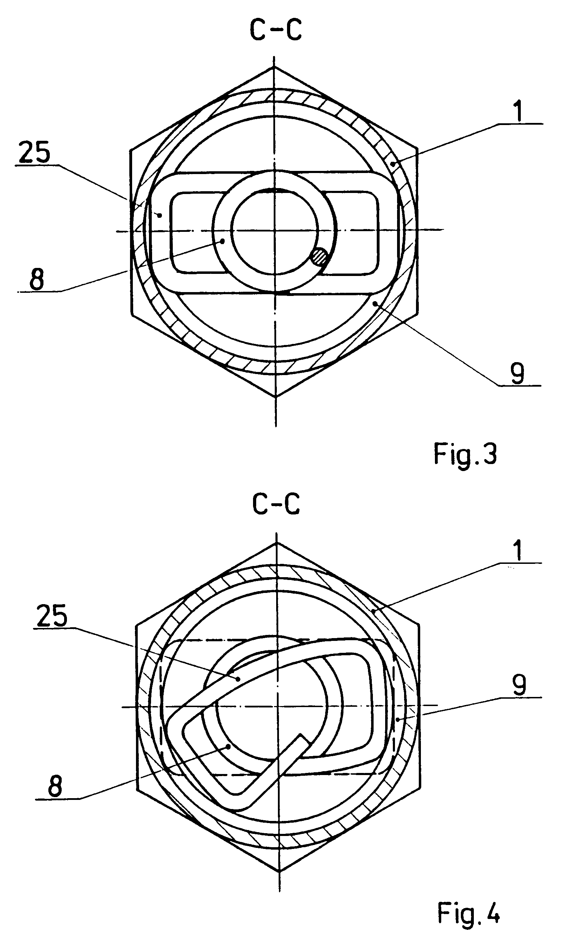

Das nachfolgend näher erläuterte und in den Zeichnungen dargestellte Brandschutzventil besitzt ein rohrförmiges Gehäuse 1, das an beiden Enden jeweils einen Anschluß aufweist, der in diesem Fall einmal durch ein Innengewinde und einmal durch ein Außengewinde dargestellt ist. Es versteht sich von selbst, daß auch ein anderer Anschluß möglich ist. In axialer Verlängerung des gleichzeitig als Einströmöffnung 2 dienenden Innengewindes schließt sich im Gehäuse 1 eine ebenfalls rohrförmige Erweiterung 3 an. Auf dem durch die Einströmöffnung 2 und die Erweiterung 3 gebildeten ersten Absatz 9 stützt sich ein Ende einer die Funktion einer Schließfeder 8 übernehmenden Druckfeder ab, das über ihren Außendurchmesser hinausragt und das in seinen Außenmaßen und/oder zur Federlängsachse verformbar ist. So stellt das Ende der Schließfeder 8 in diesem Fall ein abgerundetes Rechteck 25 dar, dessen lange Achse zur Federlängsachse elastisch verformbar ist und so einerseits eine problemlose Montage der Schließfeder 8 ermöglicht (Fig. 4), aber andererseits auch für eine sichere Abstützung der Schließfeder 8 sorgt (Fig. 3).

Das andere Ende der Schließfeder 8 stützt sich auf der Oberfläche eines metallischen Schließkörpers 11 ab, der zu diesem Zweck auf seiner Oberfläche vorteilhafterweise eine zusätzliche umlaufende Nut 26 aufweist.

Der metallische Schließkörper 11 besitzt im Dichtungsbereich eine kugelförmige Gestalt, mit der er unter der Kraft der Schließfeder 8 in geöffneter Stellung auf drei Festpunkten, die durch zwei Kugeln 27 und einem temperaturempfindlichen Bauelement 28 gebildet werden, aufliegt. Dabei ist es vorteilhaft, wenn die beiden Kugeln 27, die sich ihrerseits auf einem zweiten Absatz 13 im Gehäuse 1 abstützen, zueinander einen solchen Abstand aufweisen, daß sie einen Öffnungswinkel von ca. 90 Grad bilden. Gegenüber diesem Öffnungswinkel ist an der Innenwand 7 des Gehäuses 1 das temperaturempfindliche Bauelement 28 befestigt.

Das temperaturempfindliche Bauelement 28 besteht aus einem nach innen offenem Napf 15, der mit seinem Napfboden 16 an der Innenwand 7 befestigt ist. In dem radial nach innen offenem Napf 15 befindet sich ein Schmelzlot 17, in das eine mit der Öffnung des Napfes 15 eine Spielpassung bildende Kugel 18 eingepreßt ist, die den dritten Festpunkt bildet, und die so bemessen ist, daß sie sich bei fehlendem Schmelzlot 17 annähernd vollständig im Napf 15 befindet .

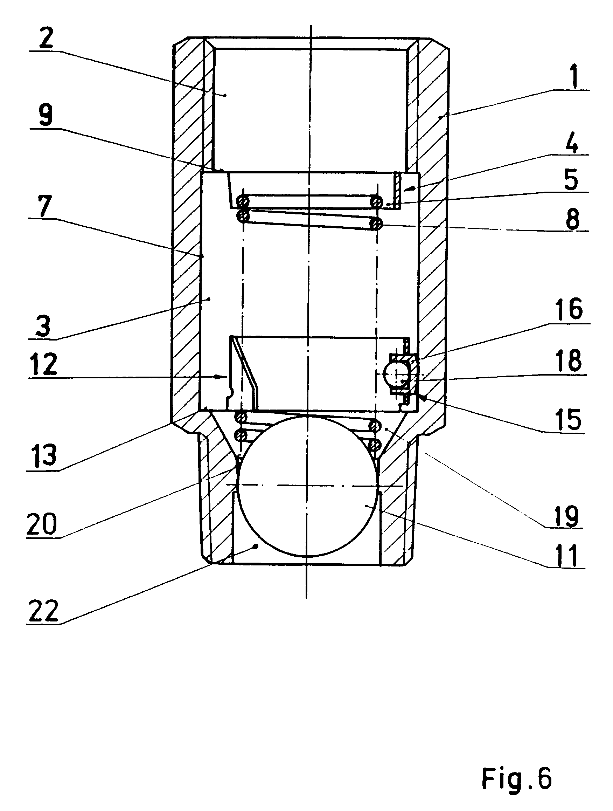

Der durch die drei Festpunkte gebildete Auflagedurchmesser für den metallischen Schließkörper 11 ist dabei so bemessen, daß der Schließkörper 11, wenn sich die Kugel 18 im Napf 15 befindet, auf Grund der wirkenden Kraft der Schließfeder 8 durch die zwischen den drei Festpunkten entstehende vergrößerte Öffnung hindurchgedrückt wird (Fig. 6).

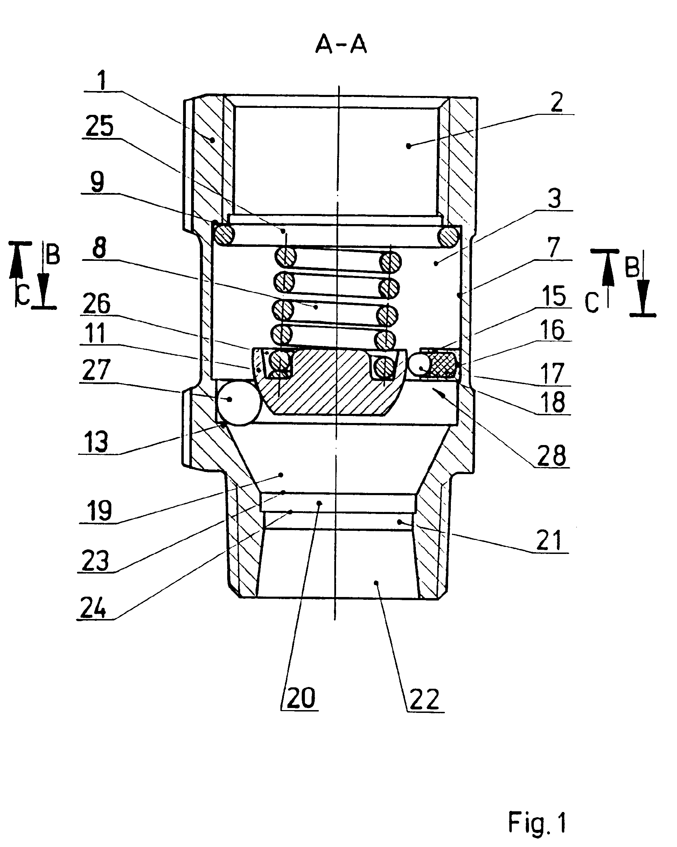

An die rohrförmige Erweiterung 3 schließt sich an den zweiten Absatz 13 eine sich in Schließrichtung des Schließkörpers 11 verjüngende kegelförmige Führung 19 an, die in eine mit dem Schließkörper 11 eine Spielpassung von günstigerweise ca. 0,2 mm bildende Bohrung 20 übergeht, an die sich eine weitere, ebenfalls axial verlaufende Bohrung 21 anschließt, die mit dem Schließkörper 11 eine Preßpassung von günstigerweise ca. 0,04 mm bildet. Im Anschluß daran befindet sich die notwendige Ausströmöffnung 22 des Gehäuses 1 (Fig. 1).

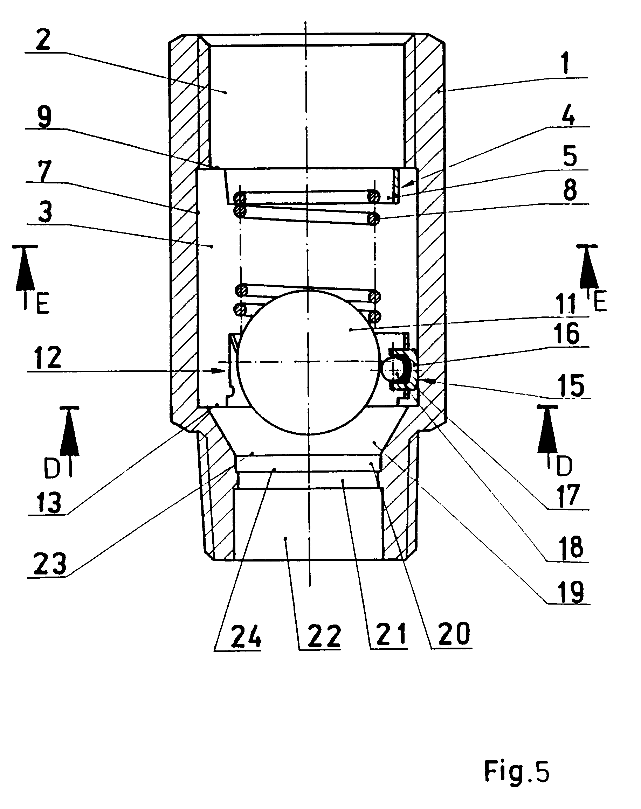

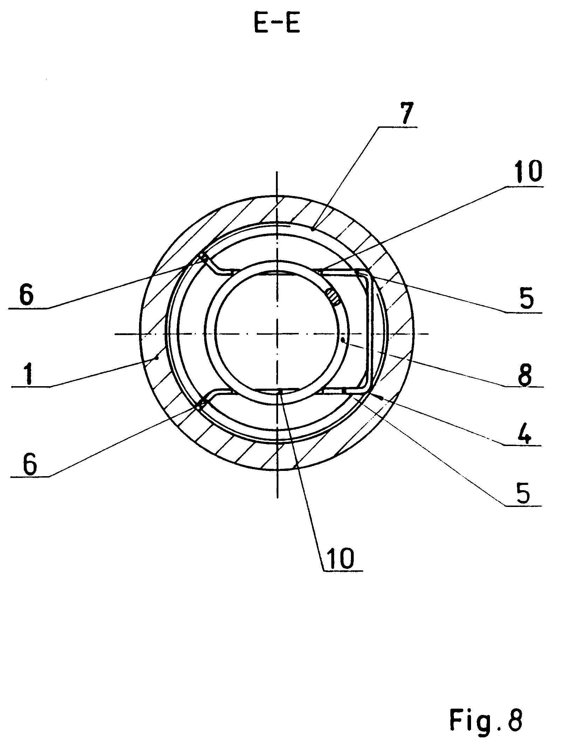

Das in Fig. 5 dargestellte und nachfolgend näher erläuterte Brandschutzventil besitzt in seiner rohrförmigen Erweiterung 3 eine U-förmig gebogene Spange 4, die mit ihren beiden Schenkeln 5, die vorzugsweise abgewinkelte Enden 6 aufweisen, federnd gegen die Innenwand 7 des Gehäuses 1 aufgespreizt ist. Dabei ist die Spange 4 als Biegeteil aus Blech ausgeführt, dessen Flächen parallel zur in Strömungsrichtung liegenden Gehäuseachse und damit auch parallel zur Innenwand 7 des Gehäuses 1 verlaufen, an der sie teilweise anliegen. Damit wird durch die Spange 4 nur ein minimaler Strömungswiderstand erzeugt. Auf den beiden Schenkeln 5 der Spange 4 stützt sich die axial im Gehäuse 1 angeordnete Schließfeder 8 ab, durch die die Spange 4 gegen den durch die Erweiterung 3 gebildeten ersten Absatz 9 gedrückt wird. Zur besseren Aufnahme und Zentrierung der Schließfeder 8 weisen beide Schenkel 5 jeweils eine Ausnehmung 10 auf, deren Länge vorteilhafterweise so bemessen ist, daß nach dem Einrasten der Schließfeder 8 ein Zusammendrücken der Spange 4, und somit ihr Herausgleiten aus dem Gehäuse 1 nicht möglich ist (Fig. 8).

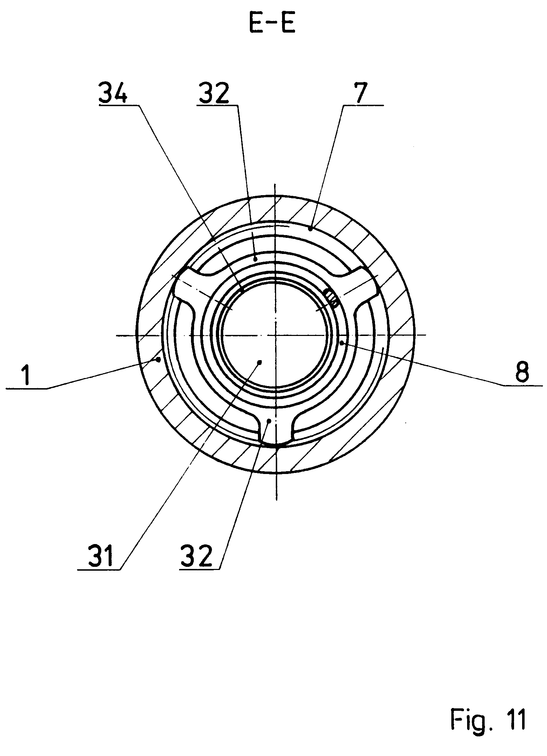

Eine andere Ausbildung der Spange ist in Fig. 11 dargestellt. Die Spange besteht in diesem Fall aus einer Scheibe 32, die drei in gleichmäßigem Abstand zueinander befindliche radiale Arme 33 besitzt. Diese Arme 33, die sich während der Montage derartig federnd verformen, daß sich der äußere Durchmesser verringert, spreizen sich nach dem Erreichen der Erweiterung 3 wieder auf. Unter der Einwirkung der Schließfeder 8 stützt sich die Scheibe 32 gegen den im Gehäuse 1 befindlichen zweiten Absatz 13 ab. Desweiteren weist die Scheibe 32 zur Erzielung eines größtmöglichen Strömungsquerschnittes eine axiale Öffnung 31 auf, die vorzugsweise die Form eines Durchzuges aufweist, dessen Steg in Richtung der Schließfeder 8 ragt, und somit als axiale Führung für die Schließfeder 8 dient.

Das andere Ende der Schließfeder 8 stützt sich auf einer den Schließkörper 11 bildenden metallischen Kugel ab, die ihrerseits auf einem Bügel 12 aufliegt, der sich wiederum auf dem zweiten Absatz 13, der das Ende der Erweiterung 3 bildet, abstützt (Fig. 5).

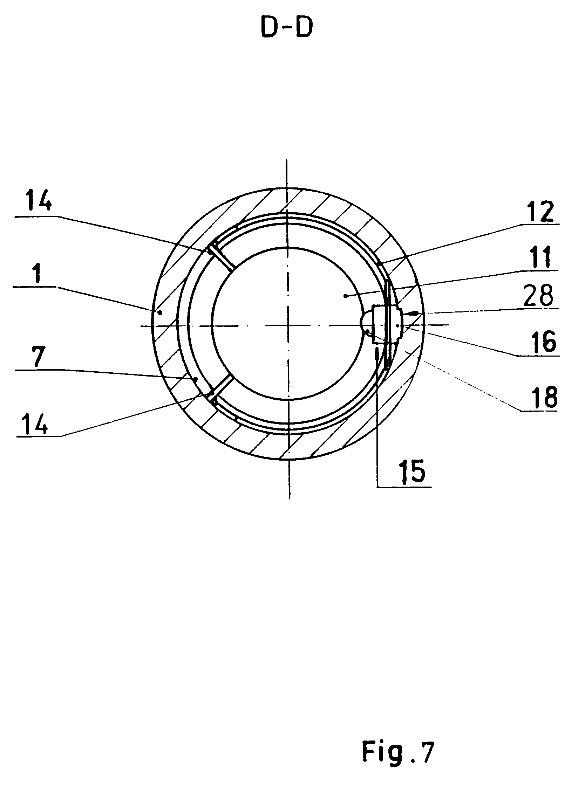

Der ringförmig gebogene Bügel 12, der ebenfalls als Biegeteil aus Blech ausgeführt ist, dessen Flächen parallel zur in Strömungsrichtung liegenden Gehäuseachse und damit auch parallel zur Innenwand 7 des Gehäuses 1 verlaufen, um nur einen minimalen Strömungswiderstand zu erzeugen, ist an seinen beiden Enden 14 radial nach innen abgebogen (Fig. 7). Hierbei ist es günstig, wenn der Bügel 12 im Bereich der Biegekanten der beiden Enden 14 auf der sich im Absatz 13 abstützenden Seite jeweils einen Freischnitt in der Art aufweist, daß die Länge der abgebogenen Enden 14 unabhängig von der fertigungstechnisch schwankenden Lage der Biegekante sehr genau eingehalten werden kann. Während die jeweils radial nach außen zeigende Kante der beiden Enden 14 sich federnd an der Innenwand 7 des Gehäuses 1 anpreßt, bilden die beiden Enden 14 des Bügels 12 ansonsten jeweils einen Festpunkt zur Auflage der den Schließkörper 11 bildenden Kugel. Dabei ist es vorteilhaft, für den Abstand der beiden Festpunkte einen Öffnungswinkel des Bügels 12 von ca. 90 Grad zu wählen. Gegenüber der Bügelöffnung ist im Bügel 12 das temperaturempfindliche Bauelement 28 befestigt, z.B. in eine im Bügel 12 vorhandene Bohrung eingepreßt, derart, daß der Napfboden 16 an der Innenwand 7 des Gehäuses 1 anliegt.

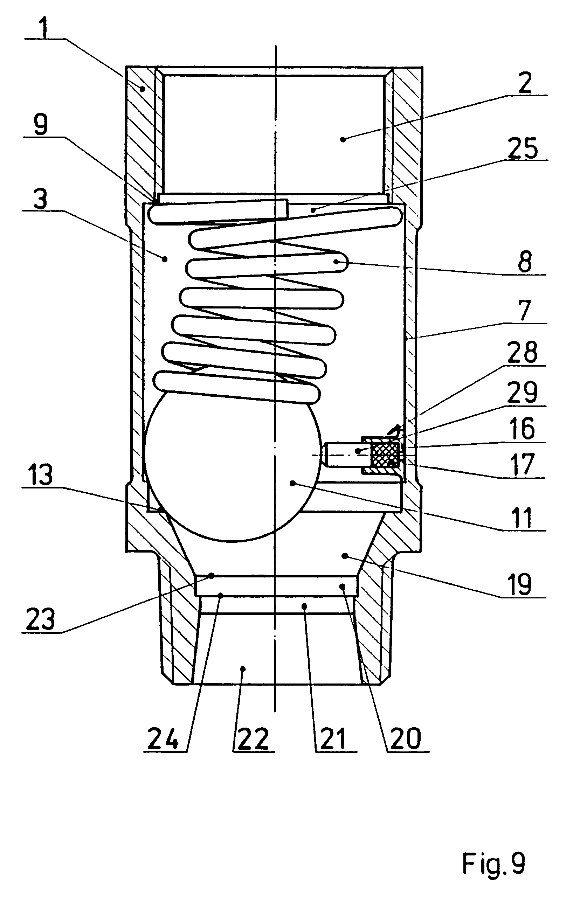

Bei einem weiteren, in Fig. 9 dargestellten Ausführungsbeispiel wird die Kugel, die den Schließkörper 11 bildet, nur durch das an der Innenwand 7 befestigte temperaturempfindliche Bauelement 28 so weit außer der Mitte gehalten, daß sie sich in Offenstellung am zweiten Absatz 13 abstützt. Um auch höhere Hübe durch das temperaturempfindliche Bauelement 28 realisieren zu können besitzt dieses statt einer Kugel 18, wie in den vorhergehenden Beispielen. einen Stift 29.

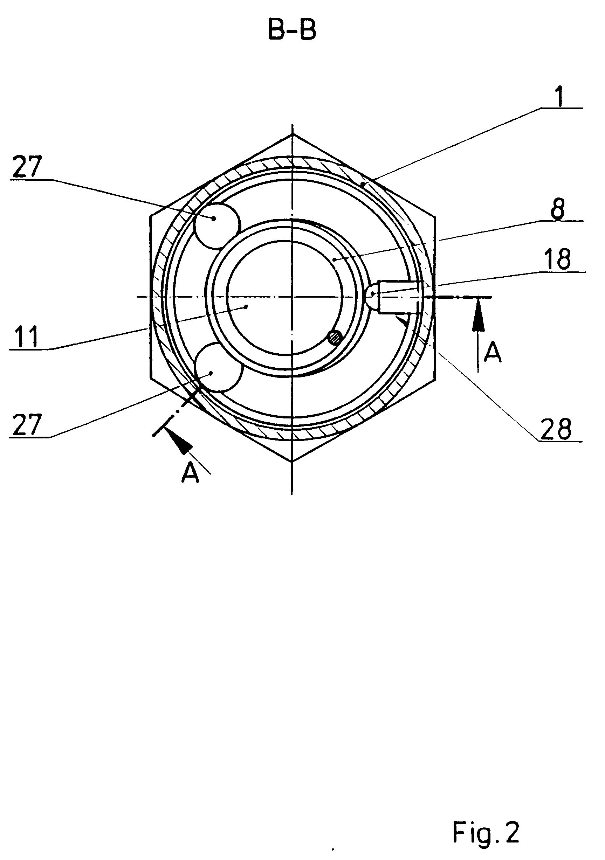

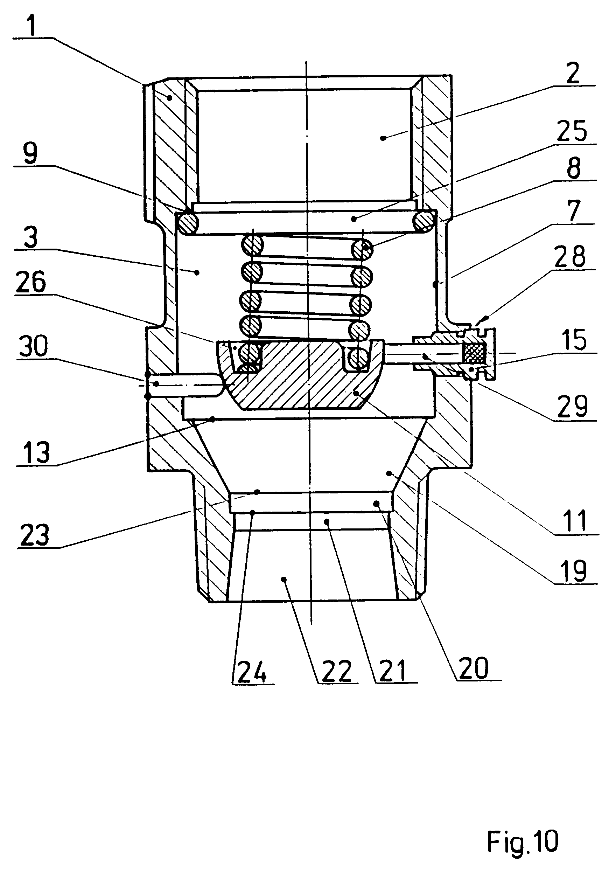

Demgegenüber stützt sich der Schließkörper 11 bei dem in Fig. 10 gezeigten Beispiel neben dem einen Stift 29 aufweisenden temperaturempfindlichen Bauelement 28 an zwei Stützen 30 ab, die analog der in Fig. 2 gezeigten Kugeln 27 angeordnet sind, jedoch von außen in das Gehäuse 1 hineinragen. Zusätzlich ist in diesem Beispiel zu sehen, daß der Napf 15 des temperaturempfindlichen Bauelementes 28 von außen in das Gehäuse 1 eingeschraubt ist , so daß ein Auswechseln ohne Probleme möglich ist.

Allen genannten Ausführungsbeispielen, die selbstredend auch noch untereinander kombiniert werden können, ist gemeinsam. daß sich unter der Kraft der Schließfeder 8 der Schließkörper 11 auf einschließlich des temperaturempfindlichen Bauelementes 28 drei Festpunkten abstützt, wobei das Brandschutzventil voll geöffnet ist (Fig. 1,5,9 und 10). Tritt durch Brand eine Erwärmung des Gehäuses 1 und damit des an der Innenwand 7 anliegenden temperaturempfindlichen Bauelementes 28 auf, wird nach dem Erreichen der Schmelztemperatur des Lotes 17 die in diesem eingebettete Kugel 18. bzw. der Stift 29, in den Napf 15 hineingedrückt, so daß der Schließkörper 11 unter der Kraft der Schließfeder 8 durch die zwischen den drei Festpunkten entstandene vergrößerte Öffnung hindurchgleitet. Die kegelförmige Führung 19 zentriert dabei den Schließkörper 11 auf die Sitzachse.

Für die sichere Funktion ist dabei die der Bohrung 21 vorgelagerte Bohrung 20 mit Spielpassung zum Schließkörper 11 besonders wichtig. Bei den bisher üblichen Lösungen wird der Schließkörper 11 beim Schließen schlagartig gegen den Ventilsitz bewegt, wobei er diesen stets anders trifft, als in der endgültigen Schließstellung. Da bei Brandschutzventilen wegen der hohen Temperaturbeanspruchung von ca. 1 000 Grad Celsius sowohl Ventilsitz als auch Schließkörper 11 metallisch sein müssen, kommt es beim ersten Aufprall bei den bisherigen Brandschutzventilen zu Verformungen im Bereich der Dichtfläche, die durch den statischen Federdruck in Schließstellung nicht mehr beseitigt werden. was mit als Ursache für die bereits eingangs genannten unbefriedigenden und nicht reproduzierbaren Dichtergebnisse angesehen werden kann. Bei dem erfindungsgemäßen Brandschutzventil nimmt die obere Kante 23 der Bohrung 20 diesen Zentrierstoß auf. Unter der Voraussetzung, daß der Schließkörper 11 aus einem härteren Werkstoff als das Gehäuse 1 besteht, kommt es somit nur zu einer Schädigung der Kante 23. Die auftretende Schädigung der Kante 23 ist jedoch ohne Einfluß auf die endgültige Schließstellung des Schließkörpers 11 in der Bohrung 21 (Fig. 6).

Da die Bohrung 21 mit dem Schließkörper 11, wie schon weiter oben beschrieben, eine leichte Preßpassung bildet, kommt es bereits bei einem leichten Andruck des Schließkörpers 11 in den oberen Rand 24 der Bohrung 21 zur Selbsthemmung. Durch die vorhandene kinetische Energie wird der Schließkörper 11 jedoch weiter in die Bohrung 21 hineingepreßt.

Auf Grund dessen, daß der Schließkörper 11 in Offenstellung nur an den drei weiter oben genannten Festpunkten (Fig. 2) jeweils punktförmige Berührung zum Gehäuse 1 hat, ist er im Fall eines Brandes stets kälter als dieses Gehäuse 1. Nach dem schlagartigen Schließen nimmt er dann sehr schnell die Temperatur des Gehäuses 1 an, wodurch sich der Preßsitz verstärkt, so daß eine praktisch gasdichte Verbindung entsteht, die der Schließfeder 8 nicht mehr bedarf, und die fest gegen Stoß und/oder Erschütterungen ist.

## Patentansprüche

1. Brandschutzventil mit Schließfeder zum automatischen Absperren von Leitungen, insbesondere von Gasleitungen, bei einer durch Brand entstehenden Temperaturerhöhung, mit einem metallischen Schließkörper (11), der im Dichtungsbereich eine kugelförmige Gestalt aufweist, wobei sich der Schließkörper (11) in Offenstellung unter der Kraft der in Schließrichtung wirkenden Schließfeder (8) einerseits durch ein temperaturempfindliches Bauelement (28) und andererseits im Gehäuse (1) abstützt, dadurch gekennzeichnet, daß der Durchmesser des metallischen Schließkörpers (11) im Dichtungsbereich mit dem Durchmesser einer in das Gehäuse (1) des Ventils eingearbeiteten Bohrung (21) bei Schließstellung des Ventils einen leichten Preßsitz bildet, und daß dieser Bohrung (21) bei Offenstellung des Ventils in Richtung des Schließkörpers (11) eine axial zu der ersten Bohrung (21) verlaufende zweite Bohrung (20) vorgeordnet ist, deren Durchmesser mit dem Durchmesser des Abdichtelementes (11) eine Spielpassung bildet, und daß sich daran eine in Richtung des in Offenstellung befindlichen Schließkörpers (11) sich erweiternde kegelförmige Führung (19) anschließt, wobei das temperaturempfindliche Bauelement (28) an der Innenwand (7) des Gehäuses (1) anliegt oder an dieser befestigt ist.

2. Brandschutzventil mit Schließfeder zum automatischen Absperren von Leitungen nach Patentanspruch 1, dadurch gekennzeichnet, daß der Schließkörper (11) in Offenstellung andererseits sich direkt oder über mehrere Kugeln (27) oder Rollen, die zusammen mit dem temperaturempfindlichen Bauelement (28) annähernd gleichmäßig über den Umfang des Schließkörpers (11) verteilt sind, an einem im Gehäuse (1) befindlichen zweiten Absatz (13) abstützt.

3. Brandschutzventil mit Schließfeder zum automatischen Absperren von Leitungen nach Patentanspruch 1, dadurch gekennzeichnet, daß der Schließkörper (11) in Offenstellung andererseits sich an ein oder mehreren an der Innenwand (7) des Gehäuses (1) befestigten vorzugsweise stiftförmigen Stützen (30) abstützt, die zusammen mit dem temperaturempfindlichen Bauelement (28) annähernd gleichmäßig über den Umfang des Schließkörpers (11) verteilt sind, wobei die Stützen (30) radial nach innen gerichtet sind.

4. Brandschutzventil mit Schließfeder zum automatischen Absperren von Leitungen nach Patentanspruch 1, dadurch gekennzeichnet, daß sich der Schließkörper (11) in Offenstellung auf drei Festpunkten eines sich an der Innenwand (7) des Gehäuses (1) anpressenden und gleichzeitig auf einem im Gehäuse (1) befindlichen ersten Absatz (9) aufliegenden ringförmigen Bügels (12) abstützt. dessen jeweils einen Festpunkt bildenden Enden (14) radial nach innen abgewinkelt sind. und dessen dritter Festpunkt durch das temperaturempfindliche Bauelement (28) gebildet wird.

5. Brandschutzventil mit Schließfeder zum automatischen Absperren von Leitungen nach einem der Patentansprüche 1 bis 4, dadurch gekennzeichnet, daß das temperaturempfindliche Bauelement (28) aus einem radial nach innen offenem Napf (15) besteht, in dem sich ein Schmelzlot (17) befindet, auf dem eine Kugel (18) oder ein Stift (29) gebettet ist.

6. Brandschutzventil mit Schließfeder zum automatischen Absperren von Leitungen nach einem der Patentansprüche 1 bis 5, dadurch gekennzeichnet, daß das dem Schließkörper (11) gegenüberliegende Ende der Schließfeder (8) sich auf einer gebogenen Spange (4) abstützt, die gegen die Innenwand (7) des Gehäuses (1) aufgespreizt ist und sich gegen einen im Gehäuse (1) befindlichen zweiten Absatz (13) abstützt, wobei in der Spange (4) Ausnehmungen (10) angeordnet sind, in denen das Federende einrastet. wenn die Spange (4) vollständig aufgespreizt ist.

7. Brandschutzventil mit Schließfeder zum automatischen Absperren von Leitungen nach Patentanspruch 6, dadurch gekennzeichnet, daß der Bügel (12) und/oder die Spange (4) Blechbiegeteile sind, deren Flächen parallel zur Strömungsrichtung oder Gehäuseachse des Gehäuses (1) verlaufen.

8. Brandschutzventil mit Schließfeder zum automatischen Absperren von Leitungen nach Patentanspruch 6, dadurch gekennzeichnet, daß die Spange aus einer, eine axiale Öffnung (31) aufweisenden Scheibe (32) besteht, die mindestens drei in gleichmäßigem Abstand zueinander befindliche radiale Arme (33) besitzt, die sich unter der Einwirkung der Schließfeder (8) gegen den im Gehäuse (1) befindlichen zweiten Absatz (13) abstützen, wobei die axiale Öffnung (31) in Richtung Schließfeder (8) einen umlaufenden, als axiale Führung für die Schließfeder (8) dienenden Steg (34) aufweist.

9. Brandschutzventil mit Schließfeder zum automatischen Absperren von Leitungen nach einem der Patentansprüche 1 bis 5, dadurch gekennzeichnet, daß das dem Schließkörper (11) abgewandte Ende der Schließfeder (8) über ihren Außendurchmesser hinausragt, und daß sich dieses in seinen Außenmaßen und/oder zur Federlängsachse verformbare Ende gegen einen Absatz (9) abstützt.

10. Brandschutzventil mit Schließfeder zum automatischen Absperren von Leitungen nach Patentanspruch 8, dadurch gekennzeichnet, daß das dem Schließkörper (11) abgewandte Ende der Feder (8) ein abgerundetes Rechteck (25) darstellt, dessen lange Achse zur Federlängsachse elastisch verformbar ist.

## Claims

1. Fire-protection valve with shutting spring for automatically shutting-off conduits, especially gas conduits, by rising temperatures due to fire, the valve has a metal closure body (11), which has a spherical shape in the sealing area whereby the closure body (11) is held in the open position due to the force of the closure springs (8) in the closure direction, the closure body (11) is supported on one side by a temperature sensitive component (28) and by the housing on the other, characterized in that diameter of the metal closure body (11) forms a slight tight fit with the diameter of bore (21) in housing (1) of the valve when the valve is in the closed position, a second bore (20) extending in the axial direction of bore (21) is upstream thereof in the open position of the valve whose diameter forms a clearance fit with the diameter of the sealing component, and it connects to a widening spherical guide (19), extending in the direction of closure body (11) in the open position whereby the temperature sensitive component (28) lies on or is attached to inner wall (7) of housing (1).

2. Fire-protection valve with shutting spring for automatically shutting-off conduits according to Patent Claim 1 characterized in that in the open position, the closure body (11) is supported on the other hand directly or via several ball-bearings or rollers, which together with temperature sensitive component (28) are distributed approximately evenly round the circumference of closure body (11), by a second stage (13) found in housing (1).

3. Fire-protection valve with shutting spring for automatically shutting-off conduits according to Patent Claim 1, characterized in that in the open position, the closure body (11) is supported on the other hand by one or several preferably bolt shaped studs (30) mounted on inner wall (7) of housing (1), which together with temperature sensitive component (28) are distributed approximately evenly round the circumference of closure body (11), whereby the studs (30) are arranged radially inwards.

4. Fire-protection valve with shutting spring for automatically shutting-off conduits according to Patent Claim 1, characterized in that in the open position, the closure body (11) is supported by three fixed points of a ring shaped hoop (12) pressing against inner wall (7) of housing (1) and simultaneously lying on the first stage (9) in housing (1). Each end (14) of the hoop is angled radially inwards forming two fixed points whilst the third is formed by temperature sensitive component (28).

5. Fire-protection valve with shutting spring for automatically shutting-off conduits according to Patent Claims 1 to 4, characterized in that the temperature sensitive component (28) consists of a radially inwardly opening cup (15) containing a solder pellet (17) in which a ballbearing (18) or bolt (29) is embedded.

6. Fire-protection valve with shutting spring for automatically shutting-off conduits according to Patent Claims 1 to 5, characterized in that the end of closure spring (8) lying opposite closure body (11) is supported by a bowed clip (4) splayed out against inner wall (7) of housing (1) and is itself supported by the second stage (13) in housing (1) and recesses (10) are located in the clip (4) which the spring ends are engaged when clip (4) fully splayed out.

7. Fire-protection valve with shutting spring for automatically shutting-off conduits according to Patent Claim 6, characterized in that hoop (12) and/or clip (4) are bent plate components whose surfaces are parallel to flow direction or housing axis of housing axis of housing (1).

8. Fire-protection valve with shutting spring for automatically shutting-off conduits according to Patent Claim 6, characterized in that clip (4) consists of a disk (32) with an axial aperture (31) and at least three regularly spaced radial arms (33) which are supported on second stage (13) in housing (1) by the forces of closure spring (8) whereby the axial aperture (31) has a circular flange (34), serving as an axial guide for closure spring (8), in the direction of closure spring (8).

9. Fire-protection valve with shutting spring for automatically shutting-off conduits according to Patent Claims 1 to 5, characterized in that the end of closure spring (8), turned away from closure body (11), juts out over its external diameter and that it is supported against stage (9) in its outer dimensions and/or against the deformable end in the spring's longitudinal axis.

10. Fire-protection valve with shutting spring for automatically shutting-off conduits according to Patent Claim 8, characterized in that the end of closure spring (8), turned away from closure body (11), forms a rounded rectangle (25) whose long axis is elastically deformable in the spring' s longitudinal axis.

## Revendications

1. Soupape coupe-feu avec ressort de fermeture automatique de canalisations, en particulier de canalisations de gaz, lors d'une augmentation de la température occasionnée par l'incendie et avec un corps obturateur métallique (11) qui dans la zone d'obturation épouse une forme sphérique, le corps obturateur (11) s'appuyant en position ouverte sous la force du ressort de fermeture (8) agissant dans le sens de fermeture, d'une part sur un élément de construction réagissant à la température (28) et d'autre part dans le boîtier (1), caractérise par le fait que le diamètre du corps de fermeture métallique (11) forme dans la zone d'obturation un léger ajustage serré avec le diamètre d'un trou (21) élaboré dans le boîtier (1) du robinet en position fermée de celui-ci et qu'il y a par rapport à ce trou (21) en position ouverte du robinet en direction du corps de fermeture (11) placé axialement en amont de ce premier trou (21) un deuxième trou (20) dont le diamètre forme avec le diamètre de la pièce d'étanchéisation (11) un ajustement avec jeu et qu'à cela se raccorde en direction du corps de fermeture (11), se trouvant en position ouverte, un guidage conique s'élargissant (19), le sous-groupe sensible à la température (28) s'appuyant ou étant fixé à la paroi intérieure (7) du boîtier (1).

2. Soupape coupe-feu avec ressort de fermeture automatique de canalisations selon revendication 1 du brevet caractérisé par le fait que le corps de fermeture (11) s'appuie d'autre part en position ouverte directement ou par l'intermédiaire de plusieurs billes (27) ou rouleaux répartis de commun avec l'élément de construction réagissant à la température (28) de manière à peu près régulière sur la circonférence du corps de fermeture (11) sur un deuxième épaulement (13) se trouvant dans le boîtier (1).

3. Soupape coupe-feu avec ressort de fermeture automatique de canalisations selon revendication 1 du brevet, caractérisé par le fait que le corps de fermeture (11) s'appuie d'autre part en position ouverte sur un ou plusieurs supports préférentiellement en forme de chevilles (30) fixées sur la paroi intérieure (7) du boîtier (1) et réparties en commun avec l'élément de construction réagissant à la température (28) de manière à peu près régulière sur la circonférence du corps de fermeture (11), les supports (30) étant dirigées radialement vers l'intérieur.

4. Soupape coupe-feu avec ressort de fermeture automatique de canalisations selon revendication 1 du brevet, caractérisé par le fait que le corps de fermeture (11) s'appuie d'autre part en position ouverte sur trois points fixes d'un étrier (12) qui se presse sur un premier épaulement (9) se trouvant dans la paroi intérieure (7) du boîtier (1), les extrémités (14) de l'étrier (12) recourbées radialement vers l'intérieur formant chacune un point fixe, le troisième point fixe étant formé par l'élément de construction réagissant à la température (28).

5. Soupape coupe-feu avec ressort de fermeture automatique de canalisations selon une des revendications de 1 à 4 du brevet, caractérisé par le fait que l'élément de construction réagissant à la température (28) se compose d'un godet (15) ouvert vers l'intérieur, dans lequel se trouve un point de brasage (17) retenant une bille (18) ou une cheville (29).

6. Soupape coupe-feu avec ressort de fermeture automatique de canalisations selon une des revendications de 1 à 5 du brevet, caractérisé par le fait que l'extrémité du ressort de fermeture (8) située en face du corps de fermeture (11) s'appuie sur une boucle recourbée (4) qui est écartée contre la paroi intérieure (7) du boîtier (1) et s'appuie contre un deuxième épaulement (13) qui se trouve dans le boîtier (1), la boucle (4) étant dotée de creux (10) dans lesquels s'enclenche l'extrémité du ressort lorsque la boucle (4) est complètement écartée.

7. Soupape coupe-feu avec ressort de fermeture automatique de canalisations selon la revendication 6 du brevet, caractérisé par le fait que l'étrier (12) et/ou la boucle (4) sont des pièces en tôle pliable dont les surfaces sont situées parallèlement au sens de l'écoulement ou de l'axe du boîtier (1).

8. Soupape coupe-feu avec ressort de fermeture automatique de canalisations selon la revendication 7 du brevet, caractérisé par le fait que la boucle (4) est constituée d'un disque (32) portant une ouverture axiale (31) qui possède au moins trois bras radiaux (33) qui s'appuient sous l'effet du ressort de fermeture (8) contre le deuxième épaulement (13) du boîtier (1), l'ouverture axiale (31) possédant dans la direction du ressort de fermeture (8) une barette circulaire (34) qui sert de guidage axial au ressort de fermeture (8).

9. Soupape coupe-feu avec ressort de fermeture automatique de canalisations selon une des revendications de 1 à 5 du brevet, caractérisé par le fait que l'extrémité du ressort de fermeture (8) située sur le côté opposé au corps de fermeture (11) dépasse du diamètre extérieur du ressort de fermeture (8) et que celle-ci dans ses dimensions extérieures et/ou son extrémité déformable par rapport à l'axe longitudinal du ressort s'appuie contre un épaulement (9).

10. Soupape coupe-feu avec ressort de fermeture automatique de canalisations selon la revendication 8 du brevet, caractérisé par le fait que l'extrémité du ressort (8) opposée au corps de fermeture (11) représente un rectancle arrondi (25), dont l'axe long par rapport à l'axe longitudinal du ressort est élastiquement déformable.
